# EUROPEAN PATENT SPECIFICATION

(11) **EP 1 188 287 B1**
(45) Date of publication and mention of the grant of the patent: **23.09.2009**
(21) Application number: 00927640.3
(22) Date of filing: 08.05.2000
(51) Int. Cl.: H04L 29/06, G01C 21/20

(54) **DETERMINATION OF THE POSITION OF A MOBILE TERMINAL**
FESTSTELLEN DER POSITION EINES MOBILEN ENDGERÄTES
DETERMINATION DE LA POSITION D'UN TERMINAL MOBILE

(30) Priority: 09.06.1999 GB 9913453; 06.03.2000 GB 0005378
(43) Date of publication of application: 20.03.2002
(73) Proprietor: Nokia Corporation, 02150 Espoo (FI)
(72) Inventor: VANTTINEN, Veijo, FIN-02770 Espoo (FI); TANG, Haitao, FIN-00700 Helsinki (FI); STAACK, Jens, FIN-00420 Helsinki (FI); SOININEN, Jonne, FIN-00250 Helsinki (FI); MUHONEN, Ahti, FIN-02150 Espoo (FI); RUUTU, Ville, FIN-02210 Espoo (FI)
(74) Representative: Style, Kelda Camilla Karen
(86) International application number: PCT/IB2000/000695
(87) International publication number: WO 2000/076171

(56) References cited:
- WO-A-98/47270
- WO-A-99/04582
- WO-A-99/12104

## Description

### FIELD OF THE INVENTION

The present invention relates to a network.

### BACKGROUND TO THE INVENTION

The General Packet Radio Service GPRS is a standard which relates to the transfer of data to and from mobile stations. The mobile stations are used in wireless cellular networks where the geographical area covered by the network is divided into a number of cells. Each cell has a base station which communicates with mobile stations or other wireless terminals located in the cell associated with the base station. Typically, the GPRS standard is provided in conjunction with the Global System for Mobile communications GSM standard. The GSM standard relates to speech services. There are elements of the GSM standard and the GPRS standard which are in common.

In the GPRS standard, the mobile station is assigned a PDP packet data protocol address by either a Home Public Land Mobile Network HPLMN or by a Visitor Land Mobile Network VPLMN. The HPLMN is the network of the network operator to which the mobile station subscribes. The VPLMN is the network in which a mobile station may be located but which is not his own network. A roaming agreement may be in place between the VPLMN and the normal (home) network operator.

The address is a dynamic Internet Protocol IP address. This means that the address is allocated when needed and then released when it is no longer needed. The same address can be used at different times by different mobile stations. This dynamic address will only be known by the elements involved in the allocation of the address and the mobile station, and will not be known by the home location register HLR which stores information on the mobile station.

A server external to the GPRS system is able to communicate with the mobile station using the PDP address allocated to the mobile station. The server and the mobile station may communicate via the Internet, the IP address identifying the mobile station such that data from the server is sent via the Internet to the current network of the mobile station.

However if the server needs to know the location of the mobile station, it is difficult for the server to obtain this information as the address is a dynamic address, that is not unique to a given mobile station.

Another problem with known networks is that it is not possible to identify the position of IP devices such as portable computers. If the portable computer is connected to a mobile station, the position of the mobile station can be identified. However, there is no knowledge by an external location services client that a given portable computer is connected to a given mobile station. Accordingly, there is no knowledge about the position of the IP device.

In more detail, in GSM the mobile station is addressed by it mobile subscriber number MSISDN while for the Internet an IP address is used. The positioning in GSM is based on the MSISDN number or the mobile station itself requests the location of the mobile station using the MSISDN as a reference. The position of an external IP device connected to the mobile station will be unknown. This is because the information on the position of the mobile station cannot be used by an external IP application which does not know the MSISDN of the mobile station to which the IP device is connected. The problem is made worse by the fact that one IP device may be connected to different mobile stations at different times or even the same mobile station with different SIM cards. Thus it is not possible to position an IP device.

A further problem is that the same IP device may be connected at different times to different networks. The networks may use GSM, GPRS or a third generation standard such as UMTS(Universal mobile telephone service)

WO99/04582 describes a system for providing location information to a mobile device connected via a mobile station to support WWW services. The mobile station provides location information to the mobile device which then transfers its location information to the WWW service provider. The WWW service provider may then provide location specific information.

### SUMMARY OF INVENTION

It is an aim of embodiments of the present invention to address this problem.

According to a first aspect of the invention there is provided a network comprising a first entity which is in communication with at least one network element, said first entity being arranged, in use, to establish a connection with an element external to said network via said at least one network element, characterized by: one of said first entity and said at least one network element being provided with a dedicated address for receiving a request for information on the location of the first entity from said external element, wherein any request received at said dedicated address is a request for information on the location of the first entity.

According to a second aspect of the invention there is provided a first entity in a network: said first entity being in communication with at least one network element, said first entity being arranged, in use, to establish a connection with an element external to said network via said at least one network element, characterized by: said first entity being provided with a dedicated address for receiving a request for information on the location of the first entity from said external element, wherein any request received at said dedicated address is a request for information on the location of the first entity. According to a third aspect of the invention there is provided a network element in a network: said network element being arranged, in use, to establish a connection between a first entity in said network and an element external to said network characterized by: said network element being provided with a dedicated address for receiving a request for information on the location of the first entity from said external element, wherein any request received at said dedicated address is a request for information on the location of the first entity.

According to a fourth aspect of the invention there is provided a method comprising: using a first entity in a network to establish a connection with an element external to said network via at least one network element; characterized by: receiving at a dedicated address of one of said first entity and said at least one network element a request for information on the location of the first entity from said external element, wherein any request received at said dedicated address is a request for information on the location of the first entity.

According to a further aspect of the present invention, there is provided a method of providing information on the location of an first entity, said first entity being connectable to a communication network via a second entity, said method comprising the steps of defining an association between said first entity and a second entity, said association comprising information identifying said first entity and information identifying said second entity, determining the location of said second entity; and based on said association, providing information on the location of said second entity as information on the location of said first entity.

Preferably the method further comprises the step of storing association between the first entity and the second entity.

Preferably the association is stored in a store external to said network.

Preferably said store is arranged to store information identifying said network.

Preferably the method comprises the step of the first entity requesting identifying information from the second entity.

Preferably the method further comprises the step of the first entity sending information identifying said second entity to said store.

Preferably the first entity sends information identifying the first entity to the store.

Preferably said communication network is a wireless network.

Preferably said network is a cellular network.

Preferably said second entity is a mobile terminal.

Preferably said information identifying said mobile terminal is one or more of its MSISDN and its PDP address.

Preferably said first entity is an IP entity.

Preferably said information identifying said IP entity is an IP address.

Preferably said first entity is a portable computer.

Preferably an authentication procedure is performed between the first entity and the second entity.

Preferably an authentication procedure is performed between the first entity and the communication network.

Preferably said first entity is arranged to request an IP address and said network allocates an address.

Preferably the first identity is arranged to establish a connection with an IP location service provider and to provide the IP location service provider with the information identifying the first entity and the information identifying the second entity.

Preferably the information identifying the first entity and the information identifying the second entity is provided to an IP location server via the communications network.

Preferably the first entity is provided with information relating to the identity of the second entity.

According to a further aspect of the present invention there is provided a network comprising a first entity and a second entity, said first entity being connectable to a communication network via a second entity, said network comprising means for storing an association between said first entity and a second entity, said association comprising information identifying said first entity and information identifying second entity, whereby the location of said first entity is determined by determining the location of the second entity associated with said first entity.

According to a further aspect of the present invention there is provided a network comprising a first station and an entity which is arranged to store information relating to the location of said first station, at least one network element being provided between the first station and said entity, said entity being arranged to receive requests relating to the location of said first station from a requester external to said network.

Preferably said entity has an interface with an external element.

Preferably said external element is a communications element which permits the entity to communicate to outside said network.

Preferably said external element is the Internet.

Preferably said requester communicates with said entity via said external element.

Preferably a plurality of networks are provided, said networks being arranged to communicate via said external element.

Preferably said entity is arranged to store information defining in which network said first station is in.

Preferably each of said networks comprises an entity.

Preferably said entity is arranged to forward the request to a respective network element in accordance with the information stored in said entity.

Preferably said network element is a GMLC.

Preferably said network element is arranged to direct a response back to said requester.

Preferably if said first station is in a different network, the request from the requester is forwarded by the entity to the network in which the first station is located.

According to a further aspect of the present invention there is provided a network comprising a first station which is in communication with at least one network element, said first station being arranged, in use, to establish communication with an element external to said network via said at least one network element, wherein said external network is arranged to send a request for information on the location of the first station to said first station, said request being carried via the same means as user information from the external network to the first station.

Preferably a transmission plane is provided between said first station and said external network, said request and user information being sent to the first station via the transmission plane.

Preferably one of said first station and said at least one network element is provided with a dedicated address for receiving the request from said external network for information as to the location of the first station.

Preferably information on the location of the first station is provided to said external network via said dedicated address. Preferably said dedicated address is a dedicated port within a user address.

Preferably the user information is received by and/or transmitted from a location in one of said first station and at least one network which is different to the dedicated address.

Preferably said first station is allocated an address, said address being unique to said first station.

Preferably said first station is allocated an address, said address being reallocated to different first stations when no longer required by said first station.

Preferably said address is allocated by said at least one network element.

Preferably said dedicated address is located in said first station.

Preferably said at least one network element is transparent to information sent between said first station and said external network.

Preferably said first station is arranged to obtain information as to its position in response to a request received at its dedicated address.

Preferably the first station is arranged to calculate the position of the first station.

Preferably said first station receives information as to its position.

Preferably said request from the external network includes information identifying the first station and the dedicated address.

Preferably said at least one network element is arranged to check requests from the external network to the first station and if a request identifies the dedicated address, to initiate a procedure for providing information to the external network relating to the position of the first station.

Preferably said dedicated address is in said at least one network element.

Preferably said at least one network element is arranged to obtain information identifying said first station in response to a request for the position from said external network.

Preferably wherein said information is the dialling number of said first station.

Preferably said information identifying the first station is forwarded to a further network element, said further network element being arranged to provide information on the position of the first station identified by said information.

Preferably said position information is provided to the external network by said further network element directly or via said at least one network element.

Preferably said information identifying said first station is sent to the external network, said external network sending a further request to a further network element including said identifying information requesting information on the position of the first station, said information being forwarded to said external network.

Preferably said at least one network element obtains said information on the identity of the first station from a register.

Preferably said first station comprises a mobile station.

Preferably said network is a GPRS network.

Preferably said at least one network element is a GGSN.

Preferably said further network element is a GMLC.

Preferably said external network is connected to said network via the Internet.

Preferably said network is a packet data network.

Preferably said request for information on the location of the first station relates to the geographic location of said first station.

Preferably said request for information on the location of first station causes a geographic positioning procedure to be started by said first station.

### BRIEF DESCRIPTION OF DRAWINGS

For a better understanding of the present invention, reference will now be made by way of example to the accompanying drawings in which:
Figure 1 shows a first embodiment of the present invention;
Figure 2 shows a second embodiment of the present invention;
Figure 3 shows a third embodiment in an UMTS system;
Figure 4 shows a fourth embodiment of the present invention;
Figure 5 shows a mobile originating request; and
Figure 6 shows a modification of the fourth embodiment of the present invention.

### DESCRIPTION OF PREFERRED EMBODIMENTS OF INVENTION

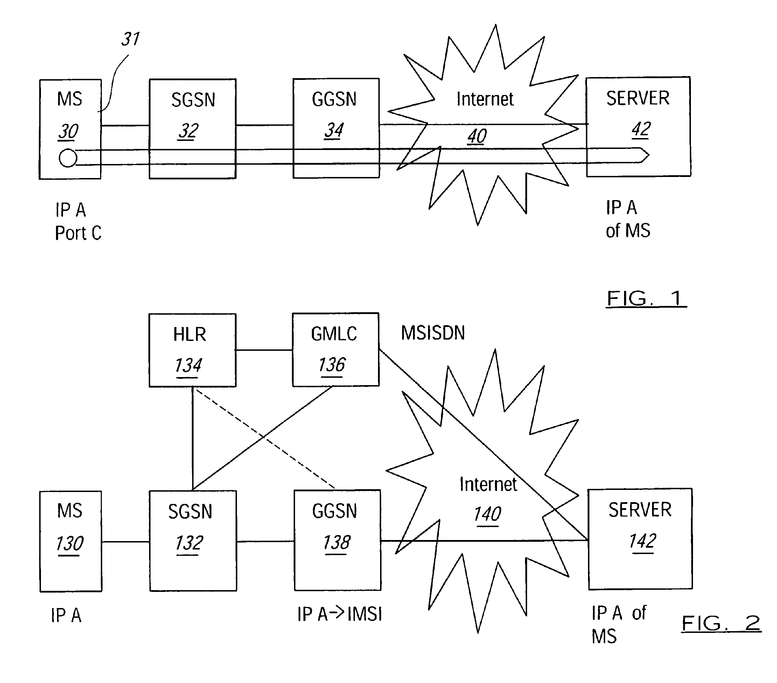

Reference is made to Figure 1 which shows a first embodiment of the present invention in a GPRS environment. The mobile station 30 is connected to a SGSN (serving GPRS support node) 32. The SGSN 32 keeps track of the mobile stations location and performs security functions and access control. The functions of the SGSN are defined in the GPRS standard.

The SGSN 32 is connected to a GGSN (gateway GPRS support node) 34. The GGSN 34 provides interworking with external packet switched networks. The GGSN thus acts as a gateway between the GPRS network and an external network. Again the functions of the GGSN are defined in the GPRS standard. In this embodiment, the GGSN 34 is connected to the Internet 40 via which the GGSN 34 can communicate with a server 42. The server may be the provider of a web site or the like. The GPRS network will include other GPRS network elements which are omitted for clarity. In some embodiments of the present invention, the SGSN and the GGSN are integrated into one physical element.

The mobile station 30 has a dedicated port 31, the function of which will be described hereinafter. This port may be TCP/IP port or a UDP/IP port. (TCP is the transmission control protocol, IP is Internet protocol and UDP is user datagram protocol. Both TCP and UDP are part of the TCP/IP suite maintained by the Internet Engineering Task Force IETF.)

The user of a mobile station 30 wants to access a web site of the server 42. The mobile station 30 therefore requests that an IP (Internet protocol) address be assigned to it. This request is made to the GGSN 34 via the SGSN 32. The GGSN 34 assigns an IP address to the mobile station 30. It should be appreciated that in this embodiment a different IP address is assigned to the mobile station each time a connection is made.

The mobile station then transmits a request packet to the server 42 which includes the address of the mobile station, the address of the server and information relating to the request for data. This packet is sent to the SGSN 32 which in turn forwards the packet to GGSN 34. The GGSN 34 forwards the packet to the Internet 40 which delivers the packet to the server 42 identified in the packet.

The SGSN 32 and the GGSN 34 may be transparent and the packet passed therethrough without modification. In this case, the address of the mobile station inserted in the packet by the mobile station will be the IP address. In the alternative, the GGSN 34 or the SGSN 32 may modify the format of the address of the mobile station before it is forwarded to the server 42. In the latter situation, data contained in the message is not altered. In particular, the GGSN 34 or SGSN 32 substitutes the mobile station's IP address for the address inserted by the mobile station.

The server 42 sends a reply packet to the mobile station 31 which includes the address of the mobile station, the address of the server and data requested by the mobile station. The GGSN 34 may be transparent to the reply packet, only identifying the mobile station from the IP address for which the message is intended and directing the reply packet to the correct mobile station. The SGSN 32 may also be transparent to the reply packet. In this case, the server will insert the IP address of the mobile station in the reply packet.

In alternative embodiments of the present invention, the GGSN 34 or SGSN 32 may modify the reply packet before forwarding the message to the mobile station. The data contained in the message would not be altered. Where the GGSN or SGSN alters the address of the mobile station in packets from the mobile station to the server, the GGSN or SGSN may alter the address of the mobile station in the packet from the server to the mobile station so that the IP address of the mobile station is substituted for the address used by the mobile station.

The messages which pass between the mobile station and the server are in packet format.

If the server 42 wants or needs to know the location of the mobile station a message is sent to the dedicated port 31 of the mobile station. This port is identified by the IP address and the port number. A different port is used for the request and reply packets. The server thus sends the position request to the dedicated port of the mobile station's IP address. The server knows in advance that if it wants to know the position of the mobile station it should send this request to a predetermined port of the mobile station. All mobile stations using the GPRS network may use the same dedicated port 31 for this positioning request. Alternatively the mobile station may include information in the request packet as to the dedicated port which should be used for location requests. The request for location information sent to the mobile station will be in packet form and will comprise the identity of the dedicated port 31 and the IP address of the mobile station.

The mobile station is configured so that it knows that any request which it receives at its dedicated port is a position request. When the mobile station 30 receives a position request from the server 42, the mobile station initiates a positioning determining procedure. The mobile station itself may calculate its position from information received from various of the network elements. Alternatively another network element may determine the position of the mobile station and provide that information to the mobile station.

The mobile station sends the position information back to the server 42 which uses it as required. This information is sent back via the dedicated port 31 of the mobile station.

In some embodiments, the mobile station can refuse to provide information on its position. The user may be provided with a message asking for confirmation as to whether or not information on the position of the mobile station can be sent. The mobile station may have three modes:
1. the mobile station always provides information on its position in response to a request;
2. the mobile station does not provide information on its position; and
3. the mobile station sometimes will provided information on its position and at other times not. This may depend on the identity of the server or the user may check each request and makes a decision on a case by case basis.

Any one of these modes may be selected. Alternatively, the mobile station may only provide one or two of these modes.

A transmission and optionally a signalling plane are defined between the mobile station and the server. The request reply packets and the request for location and reply packets are both sent on the transmission plane.

Reference is now made to Figure 2 which shows a block diagram of a second embodiment of the present invention. The mobile station 130 is connected to a SGSN 132. The SGSN is connected to a HLR (home location register) 134, a GMLC (gateway mobile location centre) 136 and a GGSN 138. The home location register 134 stores information relating to the mobile station 130 such as the services to which the user has subscribed and the like as well as its MSISDN as will be described in more detail hereinafter.

The HLR 134 may also be connected to the GGSN 138 although this connection may not be present in alternative embodiments of the present invention. The GMLC 136 is a gateway between the GPRS network and the external networks such as the Internet. The external network may be an IP network or a different type of network. Again the function of the GMLC is defined in the GSM standard. The GGSN 138 and the GMLC 136 are both connected to the Internet 140. This allows the GGSN 138 and GMLC 136 to communicate with a server 142 via the Internet 140.

In this embodiment, the mobile station will be allocated an IP address as in the embodiment shown in Figure 1. Each mobile station will have either a real or a virtual dedicated port which is used when the server 142 requires position information from the mobile station. Where a virtual port is provided, this port will not actually exist in the mobile station. The dedicated port may have the same form as discussed in relation to Figure 1. The connection is set up in a similar manner to that described in relation to Figure 1. However, when the server 142 sends a request directed to the dedicated port of a given mobile station, this message is intercepted by the GGSN 138. The GGSN 138 uses the IP address of the mobile station to determine the mobile station's IMSI (international mobile subscriber identity). The GGSN 138 will have a register which stores the correspondence between the IP address of a mobile station and the IMSI. This is because the GGSN will have done the allocation of the IP address originally.

Using the IMSI information, the GGSN 138 requests the mobile station's MSISDN (mobile station International ISDN (Integrated Services Digital Network)) from the HLR 134. This is the telephone number of the mobile station. The MSISDN is then sent by the GGSN 138 to the server 142 via the Internet 140. The server 142 then sends a request to the GMLC 136 via the Internet 140 requesting the position of the mobile station associated with the MSISDN included in the message sent by the server 142 to the GMLC 136. The GMLC 136 then arranges for the position of the mobile station associated with the MSISDN to be determined. The position of the mobile station is established using the normal positioning procedures. Once the GLMC 136 has determined the position of the mobile station or has been advised of the position of the mobile station, this information is sent to the server 142 via the Internet 140.

In a modification to this embodiment, a connection is provided between the GGSN 138 and the GMLC 136. Once the GGSN 138 has obtained the MSISDN from the HLR 134, the GGSN 138 sends this information to the GMLC 136 along with a request for the position of the mobile station associated with the MSISDN. When the GMLC has calculated or has received the position of the mobile station this is either sent back to the GGSN 138 or to the server 142 via the Internet 140.

If the position of the mobile station is sent back to the GGSN 138, the GGSN 138 forwards that information to the server 142 via the Internet. If the position of the mobile station is sent directly by the GMLC 136 to the server, the GGSN 138 will forward to the GMLC 138 information as to where the information on the position of the mobile station is to be sent.

In a further modification to the invention, the GGSN 138 is provided with a dedicated port which is arranged only to receive position requests for mobile stations and to send information on the position back to servers.

In this modification a server will send a position request to the dedicated IP port in the GGSN. The information sent by the server to the dedicated IP port will include the IP address of the mobile station. As with the second embodiment, the GGSN 138 obtains the MSISDN from the HLR 134. The MSISDN is then used as in the second embodiment of the invention or its first variation.

The server 42 could provide a packet to the dedicated port containing requests for the positions of a number of mobile stations.

In the described embodiments of the invention, the mobile station is described as having a dynamic IP address, that is an address which changes between different connections of the mobile station. In alternative embodiments of the present invention, the mobile station may have a static IP address, that is an IP address which does not change between communications. In the second embodiments and the modifications thereof, a translator may be provided for translating the IP addresses into MSISDN information. This translator could be provided in any suitable location. The location request procedure and the translation procedure may be combined into a single procedure. In the second embodiment and its modifications the location request procedure could be passed to the GMLC via the GGSN either directly or indirectly.

The server 42 may request the position of the mobile station for a number of reasons. For example a user may have ordered a taxi from a server and the taxi server want to know the location of the caller in order to send a taxi to the user. Alternatively the server may be a bus server. The user may have accessed the bus server in order to obtain bus timetable information. The server may request the position of the user in order to send to the user timetables relating to the current location of the user.

Within the transmission plane signalling a protocol for enquiring about the MS location may be conveyed. The protocol can be a specific protocol on top of a transport layer protocol (UDP/TCP) with its own port number or it can be part of an existing protocol and the MS location enquiry can be recognised using a specific message identifier within the existing protocol. Generally, the protocol is identified from the transport layer payload using an identifier in the transport layer protocol header. The protocol for enquiring about the location can also be intercepted from the transmission plane in the GGSN. This is the case in the second and third embodiments of the invention. Embodiments of the invention can be used with fixed network Internet access servers. This means that whenever an Internet access server recognises a specific user data enquiry protocol within the transmission plane it can check the user data associated with the access line (e.g. fixed network subscriber data such as calling line identifier) and send it to the enquiring user.

The location of the mobile station requested by the server may be the cell in which the mobile station is located or may be a more exact procedure. Any suitable procedure may be used. For example the geographic location can be determined using positioning procedures such as E-OTD.

The embodiments described hereinbefore have involved requests for the position of a mobile station. Embodiments of the invention are applicable to any other type of user equipment, which may be mobile or stationary. The user equipment may comprise computer terminals.

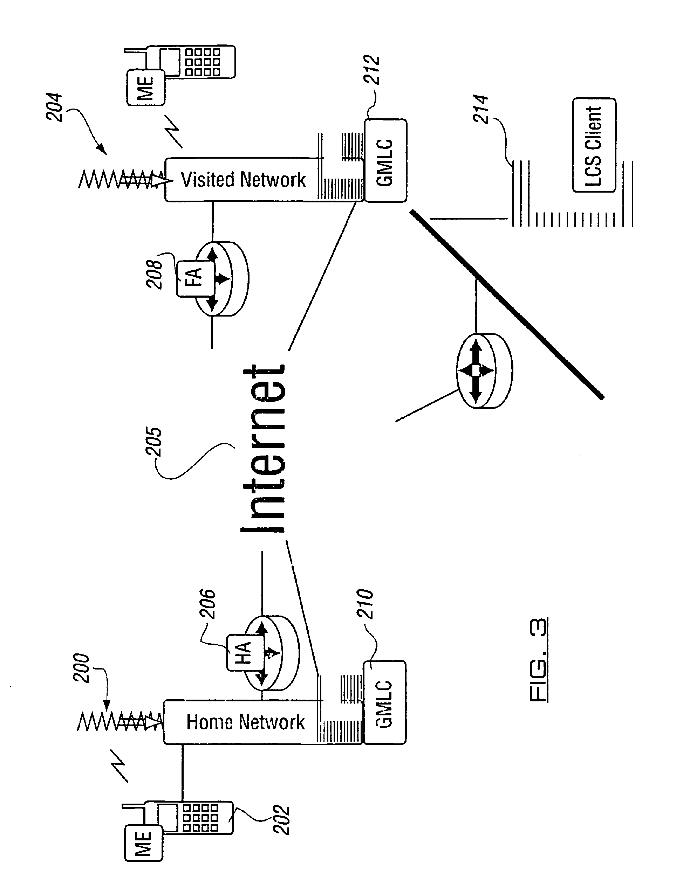

Reference will now be made to Figure 3 which shows an embodiment of the present invention of a third generation system using wideband code division multiple access WCDMA. In particular, Figure 3 shows a UMTS (Universal Mobile Telecommunications System) arrangement, which provides a packet data service. The data can be circuit switched or packet switched.

A mobile Internet protocol (IP) can be used in the GPRS/UMTS system of Figure 3. The arrangement of Figure 3 has a first network 200, which is the home network of a mobile station. The mobile station can be any suitable type of mobile equipment ME 202. A second network is also provided and this is a network, which can be visited by the mobile equipment.

The first and second networks 200 and 204 are connected together. via the Internet 205. The home network 200 has a home agent 206 and the visitor network has a foreign agent 208. As in the embodiment shown in Figure 2, a GMLC 210, 212 is provided in both the home network 200 and the visitor network 202.

A home agent is used to register the current care-of address of the mobile host.

In mobile IP, the home address is static and is used, for instance, to identify TCP connections. The care-of address changes at each new point of attachment and can be thought of as the mobile node's topologically significant address; it indicates the network number and thus identifies the mobile node's point of attachment with respect to the network topology. The home address makes it appear that the mobile node is continually able to receive data on its home network, where mobile IP requires the existence of a network node known as the home agent. Whenever the mobile node is not attached to its home network (and is therefore attached to what is termed a foreign network), the home agent gets all the packets destined for the mobile node and arranges to deliver them to the mobile node's current point of attachment.

Whenever the mobile node moves, it registers its new care-of address with its home agent. To get a packet to a mobile node from its home network, the home agent delivers the packet from the home network to the care-of address. The further delivery requires that the packet be modified so that the care-of address appears as the destination IP address. This modification can be understood as a packet transformation or, more specifically, a redirection. When the packet ar4rives at the care-of address, the reverse transformation is applied so that the packet once again appears to have the mobile node's home address as the destination IP address. When the packet arrives at the mobile node, addressed to the home address, it will be processed properly by TCP or whatever higher level protocol logically receives it from the mobile node's IP (that is, layer 3) processing layer.

In mobile IP the home agent redirects packets from the home network to the care-of address by constructing a new IP header that contains the mobile node's care-of address as the destination IP address. This new header then shields or encapsulates the original packet, causing the mobile node's home address to have no effect on the encapsulated packet's routing until it arrives at the care-of address. Such encapsulation is also called tunnelling, which suggests that the packet burrows through the Internet, bypassing the usual effects of IP routing.

Foreign agent is a mobility agent on the foreign network that can assist the mobile node in receiving datagrams delivered to the care-of address.

Care-of address is an IP address at the mobile node's current point of attachment to the Internet, when the mobile node is not attached to the home network. A collocated care-of address is a care-of address assigned to one of the mobile node's network interfaces, instead of one being offered by a foreign agent.

A location service LCS client 214 is also provided. The location service client 24 is the party which requires the location so that for example a user is provided with information relating to his current location.

In the current third generation systems, there will be an authorisation, authentication and accounting (AAA) model. This model can be used for the distribution of location service information such as position information. In the current Internet as well as future third generation mobile networks, there will be an AAA framework. The framework describes how clients can be authenticated in the Internet and how their authorization to the various services is provided. The AAA framework includes the retrieval of authentication information from directories. It also discusses how information on a given client's authority to access various services is recorded in the network.

The location service client 214 sends a request to the home agent 206. The connection between the location service client 214 and the home agent 206 is via the Internet 205. When the mobile station is in the home network, the home agent 206, which knows whether or not the mobile station is in the home network 200, will forward the request from the location service client 214 to the GMLC 210 of the home network 200.

The GMLC 210 of the home network 200 processes the request and obtains the location of the mobile station. This can be done in any of the ways previously described. The GMLC 210 forwards the information directly to the location service client 214 via the Internet 205. Alternatively, the GMLC 210 forwards the location information to the home agent 206 which in turn sends the information to the location service client 214. This is via the Internet 205.

When the mobile station is visiting another network 204, the request from the location services client 214 is forwarded to the home agent 206. The home agent 206 knows which network the mobile station is visiting and will forward the request the foreign agent 208. The home agent 206 and the foreign agent 208 are connected to each other via the Internet 205. The foreign agent 208 forwards the request to the GMLC 212 of the visited network 204. The GMLC 212 processes the request and obtains the position of the mobile station as discussed previously. The response from the GMLC 212 of the visited network 204 is sent to the location services client 214. This may, but not necessarily, be via the foreign agent 208. The response is sent via the Internet 205. In an alternative embodiment of the invention, the reply from the GMLC 212 of the visited network 202 is returned to the home agent 206. This may or may not be via the foreign agent 208. The home agent will then send the response to the location services client.

The LCS client contacts the home agent (HA) of target subscriber. The HA authenticates and verifies the authority of the LCS client to request the location of the target subscriber. The authentication is done using a well known internet authentication algorithm such as Diffie-Hellman algorithm. The authentication data that verifies the identify to the LCS client and the authorization data that verify the authority of the LCS client to request the position of the target subscriber may be retrieved from a directory or policy service such as an LDAP or X.500 directory.

The HA checks the registration data in its database to find out the address of the foreign agent (FA) under which the target subscriber is currently registered. The HA contacts the FA to enquire the location of the target subscriber. At this point the FA may authenticate the HA and check its authority to enquire this kind of information from the foreign agent. The authentication and authorization data may be enquired from a directory or policy service. If the enquiry is authorized, the FA contacts the GMLC to enquire the location information. The target subscriber may have been identified using an IP address to the FA, so before the GMLC contact, the FA may have translated the IP address into an MSISDN address. The translation may occur as described earlier herein. After the enquiry is received by the GMLC, the location enquiry is served by the GMLC in accordance with the LCS specifications GSM 03.71 or 3GPP UMTS 23.071. The answer received to the GMLC is returned to the FA. The reply is forwarded from the FA to the HA. At this point the coordinate system of the reply may be converted to a coordinate required by the LCS client. For instance, GPS coordinates may be converted to another coordinate format or vice versa.

The coordinate translation mechanism harmonizes the coordinates used in different types of FAs that are based on different technologies (GPRS, UMTS, WLAN, fixed). The coordinate translation mechanism or service could be in association with either FA or HA.

For instance, the FA may not be a GPRS FA in association with, for instance, a GGSN as assumed previously. Instead, the FA may be a FA within a wireless local area network (WLAN) or it may be a FA within a fixed local area network with fixed host location coordinates for each host in that network. In these cases, the coordinates returned by the FA to the HA may be in a different format than, if the coordinates returned by an FA in a GPRS network using GMLC for positioning. The coordinate system may differ in the granularity of the location coordinates.

Similarly, the coordinate system to which the coordinates are translated may be a human understandable position describing system such as e.g. country/city/street/house.

This embodiment can be used where the current location of the mobile station and its point of attachment to the network need to kept confidential from the client. The home agent is a new point of attachment for the location services client and more particularly for the information requests from the location services client.

The protocol used in this embodiment can be based on either a system using an IP address for the mobile station and a port number or can be carried using the AAA model. The home agent may not access the GMLC associated with the visited network directly but instead the access is via the foreign agent. This has the advantage that location information can be requested from a variety of foreign agents. For example a foreign agent may be based on wireless local area networks (WLAN) and could be provided with fixed coordinate information or GPS receivers.

It is possible for the request from the location services client to be sent directly to the GMLC 210, without going through the home agent. This may be implemented in some embodiments of the invention. The use of the home agent has some advantages. Firstly the location of the GMLC of the network with which the mobile station is currently located may be unknown. This may occur where the mobile station is roaming. The mobile station may want its location to remain confidential in respect of some or all the location client services requests. The foreign agent address is normally used by several mobile stations, making the identification of a specific mobile station difficult. There is a limited pool of care-of addresses at the foreign agent and these addresses can be occasionally deallocated. Therefore, and old care-of address may be reused quite soon. The direct use of the GMLC bounds the use only for GSM/GPRS/UMTS access.

The location request to the home agent or the foreign agent may be received by the specific authority in association with the respective home or foreign agent. The authority takes care of the previously mentioned authentication and authorisation procedures. The authority means may access the directory services or specifically AAA servers storing the authentication and authorization information.

The AA server or directory accessed by the home agent or its associated authorisation means typically stores information such as how to identify the LCS client and when identified whether the particular client has the authority to enquire about the location of the target subscriber.

In alternative embodiments of the present invention, the authorization, authentication and accounting model can be used. If so, mutual authentication of the location services client, the home agent and the foreign agent can be implemented. This means that there can then be trust between the parties.

In one modification, a coordinate translation mechanism is provided for harmonising the coordinates used in different technologies. The coordinate translation mechanism could be association with either the foreign agent or home agent or both.

One alternative would be to obtain the GMLC address of the GMLC associated with the current location of the mobile station from the home agent.

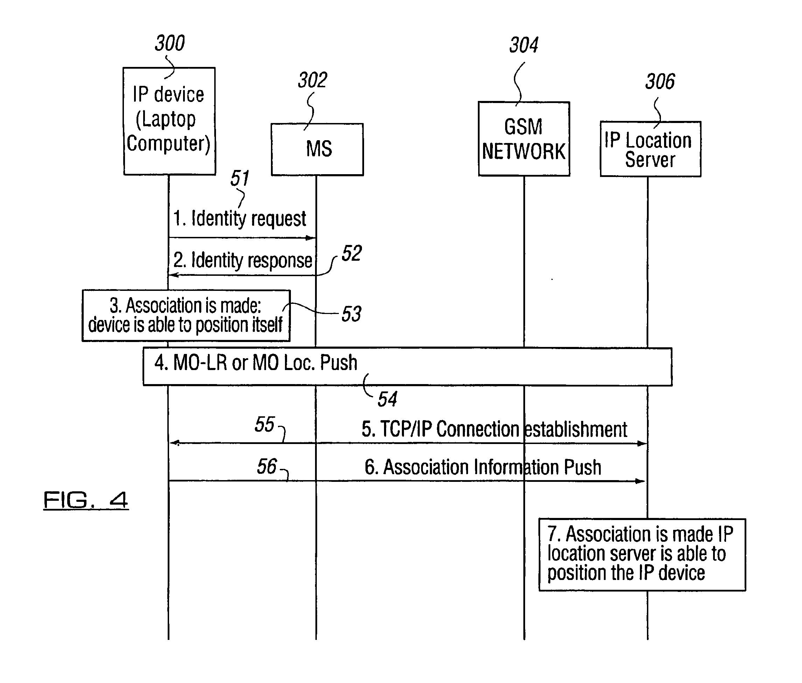

Reference will now be made to Figure 4, which shows an embodiment in which the position of an IP device can be determined. An IP device is a portable or even fixed computer or any other Internet protocol device.

An IP device requests the identity of an access node and associates its own identity with the one in the access node. An external location server makes a similar association. The information for this is delivered by the IP device to the location server. The association is used to enable the positioning of the IP device in different access networks to be determined.

In Figure 4, an IP device 300 in the form of a laptop computer is connected to a mobile station 302 which is the access node. The embodiment is described in the context of a GSM network 304 which is the access network. There is an IP location server 306.

The following steps are carried out in order to enable the positioning of the IP device 300. In step S1 the IP device 300 sends an identity request to the mobile station 302. This message can include the IP address of the IP device to be used later for accepting further service requests.

In step S2, the mobile station answers the request by sending its MSISDN in an identity response message to the IP device. The MSISDN may be provided, for example by the use of a SIM toolkit.

In step S3, the IP device 200 temporarily associates itself with the MSISDN.

In step S4, it is possible to start a mobile originating location request procedure MOLR or a mobile originating location push MO-Loc-push procedure. In the latter case, information about the association between the IP device 300 and the mobile station 302 can be delivered to the external location server306.

In step S5, the IP device 300 starts a TCP/IP connection to an external network (not shown) using the GSM procedures.

In step S6, the IP device 300 sends information about itself, information about the mobile station 302 and information about the access network 304 to the IP location server 306. The information about the IP device may comprise its IP address. The information about the mobile station 302 may comprise its MSISDN and/or its PDP address. The information about the access network may comprises its identity.

It may in alternative embodiments of the present invention be possible for the IP device to send the information obtained in step S3 if required. For example, the IP location server may want to store some location information.

The IP location server 306 associates, in step S7, the received MSISDN with the IP address of the IP device. The positioning of the IP device 200 can be determined from the association with the MSISDN number.

Steps S5 to S7 may be omitted if the location server 306 has already received the required information in previous steps.

The TCP/IP connection is only one example. Other types of connection can be used in embodiments of the invention. The signalling network may be used to send information to the external server.

With the embodiment described, it is possible to use the same static IP address in relation to a given IP device, regardless of the position of the IP device. The association based method is flexible. The associations are easy to make and easy to cancel. No changes to the GSM infrastructure or protocols are required. In some embodiments of the invention, the infrastructure and/or protocol may be changed. The IP device can be positioned independently of the access technology which in the described embodiment is GSM.

The inter working between the IP device 300 and the mobile station 302 may be based on any appropriate protocol.

Relevant protocols relating to location service function in GSM can be found in the following:
RRLP - GSM 04.31
LLP - GSM 04.71
BSSAP-LE - GSM 09.31
MAP - GSM 09.02
BSSLAP - GSM 08.71
SS - GSM 04.80

There are variations on the method by which the MSISDN can be obtained by the location server. It could be obtained from the mobile station, from the home location register (for example via SCP and MExE/SAT). Another alternative is that the IP addresses used or allocated are reported along with the MSISDN with MAP subscriber location report to the GMLC from the SGSN.

This embodiment is of course applicable to access networks other than GSM networks.

The IP address of a device can be fixed or can be changed.

In some embodiments of the present invention, more than one location server may be provided.

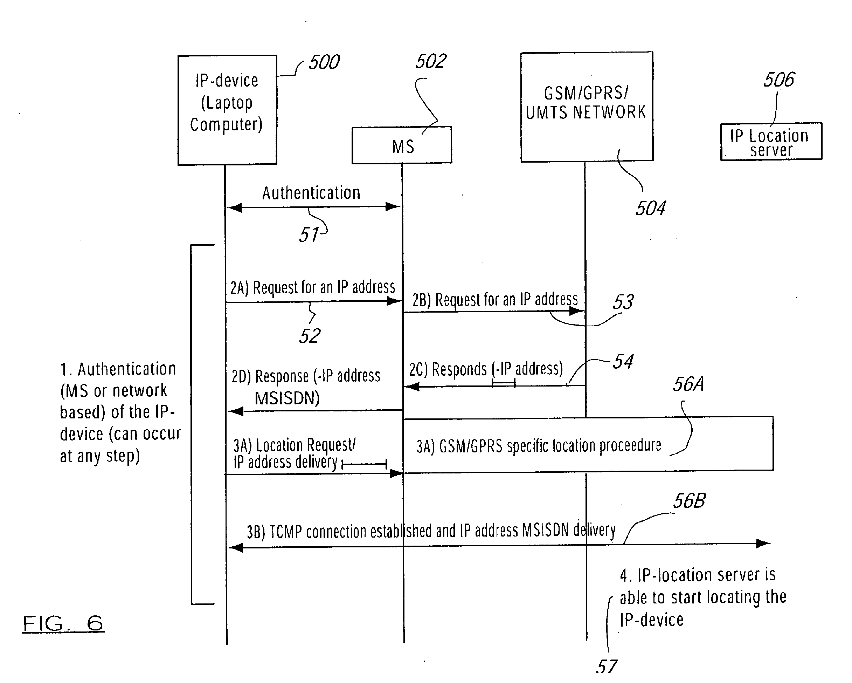

Reference will now be made to Figure 6 which shows a variation of the method of Figure 4. Again in the arrangement of Figure 6, a temporary association is made between the mobile station and the IP device.

In the first step S1, the IP device 500 authenticates itself with the mobile station 502. In this embodiment, the IP device is a portable computer but can be any suitable device. The IP device 500 is in one of two states, a connected state or an unconnected state. Whenever the IP device 500 is connected to the mobile station, the authentication procedure of step S1 is executed. However, when the IP device 500 is in the unconnected state, then any procedure which relates to the positioning of the IP device is aborted. The authentication can take any suitable format. For example, the IP device 500 can provide a personal identification number (PIN) to the mobile station 502. If the number is correct, the IP device 500 is authenticated by the mobile station 502. If the PIN code is incorrect, the IP device 500 may be permitted to retry the authentication for a certain number of times. The mobile station 502 may indicate to the IP device 500 when it has been correctly authenticated.

Alternatively, the IP device 500 may provide the PINcode to a server in the network. The network may be a GSM network, a GPRS network or a UMTS network or indeed any other suitable network. The server in the network will make the necessary authentication. The second alternative may be preferable to the first in that it is safer. However, the network must support the authentication. This may mean that in some implementations of the present invention, it may be preferable to use the first alternative.

The network authentication procedure may be based on a SIM application tool kit. Alternatively, the authentication could be based on the mobile station application execution environment (MExE).

It should be appreciated that the first step S1 which involves the authentication of the IP device can take place at any suitable point and does not necessarily need to be carried out in the beginning.

In step S2, the IP device 500 may request an IP address from the mobile station 502. The IP device 500 may request optionally the MSISDN if it is not known by the IP device 500.

In step S3, the mobile station 502 sends a request to the network 504 for an IP address to be allocated to the IP device 500 which is connected to the mobile station 502. The request may for example be sent to the SGSN of a GPRS network or a similar node in other types of network. Optionally, the request may include a request or the MSISDN of the mobile station.

In step S4, the network allocates an IP address and sends it to the mobile station 502 together with the optional MSISDN.

In step S5, the mobile station 502 forwards the IP address and optionally the MSISDN to the IP device 500. For this identity request procedure, technologies such as SIM application tool kit, mobile station application execution environment or even customised applications for mobile network enhanced logic (CAMEL) could be used.

In step S6, the IP device 500 has two options to deliver the recently allocated IP address to an IP location server 506 in the internet. In step S6a, the IP device requests the mobile station 502 to deliver the IP address to an external client, that is the location centre 506 using the GPRS/GSM or UMTS specific internal signalling procedures, such as the mobile originated location request. Alternatively, as shown in step S6b, the IP device 500 may start an IP connection to the IP location server 506 and deliver the IP address and the mobile station identity, for example the MSISDN to the IP location server 506.

In the final step S7, the IP location server 506 makes an association between the MSISDN number and the IP address. The server is ready to start locating the IP device by sending a location request to for example a gateway mobile location centre (GMLC) with the information of the MSISDN and the IP address.

It should be appreciated that any other suitable identity of the mobile station may be used instead of the MSISDN.

Embodiments of the present invention allow the IP device to be positioned reliably via its attached network which can be any suitable network. If the network is a GSM network, the GSM has specific infra structure and methods may be used without modification. It is advantageous that no changes to the GSM infra structure or the protocols are required. However, it should be appreciated that in alternative embodiments of the present invention, infra structure or protocol modifications may be made to the GSM system.

The association between the IP address and the MSISDN can be made known by external clients such as the IP location server. Association can also be used by the IP location server to position the IP device. Thus, the IP device is able to use the IP address to request its own position without the intervention of an IP location centre by using the networks internal procedures which are usually regarded as being secure and reliable.

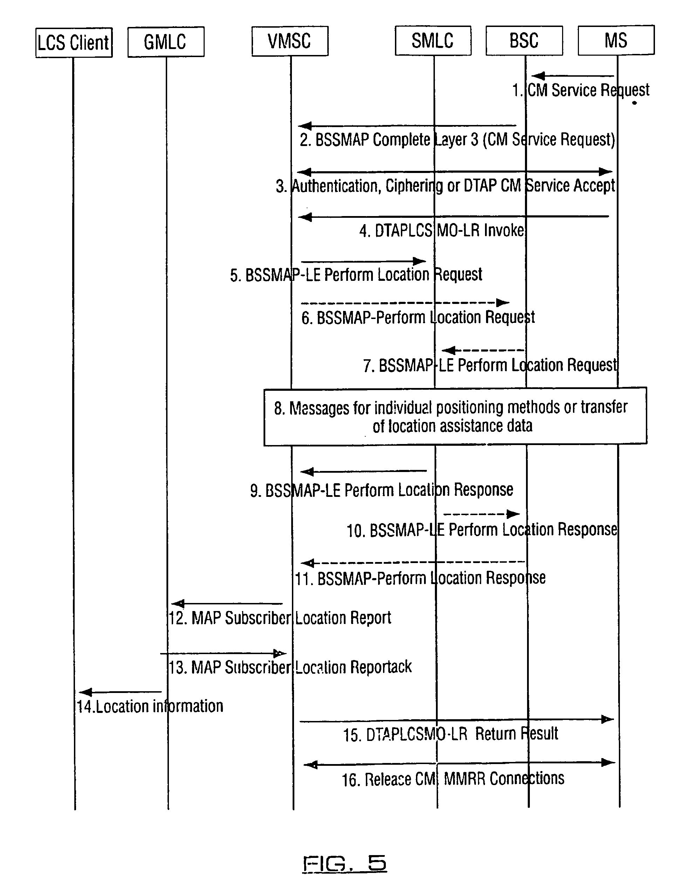

The following procedure which is described in relation to Figure 5, allows an MS to request either its own location, location assistance data or broadcast assistance data message ciphering keys from the network. This is referred to as a mobile originating location request MO-LR. Location assistance data may be used subsequently by the MS to compute its own location throughout an extended interval using a mobile based position method. The ciphering key enables the MS to decipher other location assistance data broadcast periodically by the network. The MO-LR after location update request may be used to request ciphering keys or GPS assistance data using the follow-on procedure described in GSM 04.08. The procedure may also be used to enable an MS to request that its own location be sent to another LCS client.

The following steps of the procedure will now be described with reference to Figure 5.

Step 1) If the MS is in idle mode, the MS requests an SDCCH and sends a DTAP CM service request indicating a request for call independent supplementary services to the BSC.

Step 2) The base station controller BSC includes the current cell ID and TA value within the BSSMAP Complete Layer 3 Information message used to convey the CM service request across the A-interface. If the MS is instead in dedicated mode, the MS sends a DTAP CM Service Request on the already established SACCH: the visitor mobile services switching center VMSC will then already have been supplied with the current cell ID from either the serving BSC or serving MSC in the case of an established call with MSC-MSC handover.

Step 3) The VMSC instigates authentication and ciphering if the MS was in idle mode or returns a DTAP CM Service Accept if the MS was in dedicated mode.

Step 4) The MS sends a DTAP LCS MO-LR invoke to the VMSC. If the MS is requesting its own location or that its own location be sent to another LCS client, this message carries LCS quality of service QoS information (e.g. accuracy, response time). If the MS is requesting that its location be sent to another LCS client, the message shall include the identity of the LCS client and may include the address of the GMLC through which the LCS client should be accessed. If a GMLC address is not included, the VMSC may assign its own GMLC address and may verify that the identified LCS client is supported by this GMLC. If a GMLC address is not available for this case, the VMSC shall reject the location request. If the MS is instead requesting location assistance data or ciphering keys, the message specifies the type of assistance data or deciphering keys and the positioning method for which the assistance data or deciphering applies. The VMSC verifies in the MS's subscription profile that the MS has permission to request its own location, request that its location be sent to another LCS client or request location assistance data or deciphering keys (whichever applies). If the MS is requesting positioning and has an established call, the VMSC may reject the request for certain non-speech call types.

Step 5) The VMSC sends a BSSMAP-LE PERFORM LOCATION request message to the SMLC associated with the MS's current cell location if the SMLC is NSS based. This message is transported using SCCP connection orientated signaling inside an SCCP Connection Request message. The BSSMAP-LE message indicates whether a location estimate or location assistance data is requested and includes the MS's location capabilities and current cell ID. If the MS's location is requested, the message also includes the currently assigned radio channel type (SDCCH, TCH-FR or TCH-HR), the requested QoS and, if available and any location measurement information including the TA value received from the BSC in step 2. If location assistance data is instead requested, the message carries the requested types of location assistance data.

Step 6) If the SMLC is BSS based, the VMSC instead sends the BSSMAP PERFORM LOCATION message to the serving BSC for the target MS.

Step 7) In the case of a BSS based SMLC, the BSC forwards the BSSMAP-LE PERFORM LOCATION request received in step 6 to the SMLC. If the MS's location is requested, the BSC may add additional measurement data to the message to assist with positioning. The message is transported inside an SCCP connection request.

Step 8) If the MS is requesting its own location, the actions described under step 10 for a MT-LR are performed. If the MS is instead requesting location assistance data, the SMLC transfers this data to the MS as described in subsequent sections. The SMLC determines the exact location assistance data to transfer according to the type of data specified by the MS, the MS location capabilities and the current cell ID.

Step 9) When a location estimate best satisfying the requested QoS has been obtained or when the requested location assistance data has been transferred to the MS, the SMLC returns a BSSMAP-LE Perform Location response to the VMSC if the SMLC is NSS based. This message carries the location estimate or ciphering keys if this was obtained. If a location estimate or deciphering keys were not successfully obtained or if the requested location assistance data could not be transferred successfully to the MS, a failure cause is included in the Perform Location response.

Step 10) For a base station subsystem BSS based SMLC, the BSSMAP-LE Perform Location response is instead returned to the serving BSC.

Step 11) In the case of a BSS based SMLC, the BSC forwards the BSSMAP PERFORM LOCATION response received in step 10 to the VMSC.

Step 12) If the MS requested transfer of its location to another LCS client and a location estimate was successfully obtained, the VMSC shall send a MAP Subscriber Location Report to the GMLC obtained in step 4 carrying the MSISDN of the MS, the identity of the LCS client, the event causing the location estimate (MO-LR) and the location estimate and its age.

Step 13) The GMLC shall acknowledge receipt of the location estimate provided that it serves the identified LCS client and the client is accessible.

Step 14) The GMLC transfers the location information to the LCS client either immediately or upon request from the client.

Step 15) The VMSC returns a DTAP LCS MO-LR Return Result to the MS carrying any location estimate requested by the MS, ciphering keys or a confirmation that a location estimate was successfully transferred to the GMLC serving an LCS client.

Step 16) The VMSC may release the CM, MM and RR connections to the MS, if the MS was previously idle, and the VMSC may record billing information.

In the Figure 5, the VMSC can be replaced by a SGSN. This means that steps similar to ones executed in the VMSC can also be executed in an SGSN.

When the IP address active has been reported to the GMLC it is possible for a client to identify using an IP address, the IP device and the associated mobile station whose position is being enquired.

The message at step 12 can be used to carry the IP addresses active for the mobile station, that is the devices whose position can be inquired from the GMLC.

Aspects of the different embodiments described may be used together.

It should be appreciated that whilst the embodiments of the present invention have been described in the context of specific networks, embodiments of the present invention can be in the context of any other suitable network. Embodiments of the invention are applicable to packet data networks and circuit switched networks. The data may be in accordance with the Internet protocol or similar packet data protocol.

Whilst embodiments of the present invention have been described in the context of a wireless network, embodiments of the present invention can also be used with wired networks.

## Claims

1. A network comprising a first entity (30;302;502) which is in communication with at least one network element (32;34), said first entity (30;302;502) being arranged, in use, to establish a connection with an element external to said network (42;306;506) via said at least one network element (32;34),
**characterized by**:
one of said first entity (30;302;502) and said at least one network element (32;34) being provided with a dedicated address (31) for receiving a request for information on the location of the first entity (30;302;502) from said external element (42;306;506), wherein any request received at said dedicated address (31) is a request for information on the location of the first entity.

2. The network of claim 1, wherein said request is carried via the same means as user information from the external element (42;306;506) to the first entity (30;302;502).

3. The network of claim 2, wherein a transmission plane is provided between said first entity (30;302;502) and said external element (42;306;506), said request and user information being sent to the first entity (30;302;502) via the transmission plane.

4. The network of any preceding claim, wherein the user information is received by and/or transmitted from an address in one of said first entity (30;302;502) and at least one network element (32;34) which is different to the dedicated address (31).

5. The network of any preceding claim, wherein said information on the location of the first entity (30;302;502) is provided to said external element (42;306;506) via said dedicated address (31).

6. The network of any preceding claim, wherein said dedicated address (31) is a dedicated port within a user address.

7. The network of any preceding claim, wherein said dedicated address (31) is located in said first entity (30;302;502).

8. The network of any preceding claim, wherein said at least one network element (32;34) is transparent to information sent between said first entity (30;302;502) and said external element (42;306;506).

9. The network of any preceding claim, wherein said first entity (30;302;502) is arranged to obtain information as to its location in response to a request received at its dedicated address (31).

10. The network of any preceding claim, wherein the first entity (30;302;502) is arranged to calculate the location of the first entity and/or receive information as to the location of the first entity.

11. The network of any preceding claim, wherein said at least one network element (32;34) is arranged to check requests from the external element (42;306;506) to the first entity (30;302;502) and if a request identifies the dedicated address (31), to initiate a procedure for providing information to the external element (42;306;506) relating to the location of the first entity (30;302;502).

12. The network of any preceding claim, wherein said network is one of a General Packet Radio Service network and a packet data network.

13. The network of any preceding claim, wherein said request relates to the geographic location of said first entity (30;302;502).

14. The network of any preceding claim, wherein said request causes a geographic positioning procedure to be started by said first entity (30;302;502).

15. The network of any preceding claim comprising:
a second entity (300;500), said second entity (300;500) being connectable to said network via said first entity (30;302;502);
means for storing an association between said first entity (30;302;502) and said second entity (300;500), said association comprising information identifying said first entity (30;302;502) and information identifying second entity (300;500), whereby information on the location of said second entity (300;500) is determined by determining information on the location of said first entity (30;302;502) associated with said second entity (300;500).

16. The network of any preceding claim comprising a third entity which is arranged to store information relating to the location of said first entity (30;302;502), at least one network element being provided between the first entity (30;302;502) and said third entity, said third entity being arranged to receive said request from said external element (42;306;506).

17. The network of claim 16, wherein said third entity has an interface with the or a second external element.

18. The network of claim 17, wherein said the or second external element is one of a:
communications element which permits said third entity (30;302;502) to communicate to outside said network; and
the Internet.

19. The network of any of claims 17 to 18, wherein a plurality of networks are provided, said networks being arranged to communicate via said the or second external element.

20. The network of any of claims 16 to 19, wherein said third entity is arranged to forward said request to a respective network element in accordance with the information stored in said third entity.

21. The network of claim 20, wherein said third entity is a Gateway Mobile Location Centre.

22. A first entity (30;302;502) in a network:
said first entity being in communication with at least one network element (32;34),
said first entity (30;302;502) being arranged, in use, to establish a connection with an element external to said network (42;306;506) via said at least one network element (32;34),
**characterized by**:
said first entity (30;302;502) being provided with a dedicated address (31) for receiving a request for information on the location of the first entity (30;302;502) from said external element (42;306;506), wherein any request received at said dedicated address (31) is a request for information on the location of the first entity.

23. A network element in a network:
said network element (32;34) being arranged, in use, to establish a connection between a first entity (30;302;502) in said network and an element external to said network (42;306;506)
**characterized by**:
said network element (32;34) being provided with a dedicated address (31) for receiving a request for information on the location of the first entity (30;302;502) from said external element (42;306;506), wherein any request received at said dedicated address (31) is a request for information on the location of the first entity.

24. A method comprising:
using a first entity in a network to establish a connection with an element external to said network via at least one network element;
**characterized by**:
receiving at a dedicated address of one of said first entity and said at least one network element a request for information on the location of the first entity from said external element, wherein any request received at said dedicated address is a request for information on the location of the first entity.

25. The method of claim 24, wherein a second entity is connectable to a said network via said first entity, said method comprising:
defining an association between said first entity and said second entity, said association comprising information identifying said first entity and information identifying said second entity;
determining the location of said first entity; and based on said association, providing information on the location of said first entity as information on the location of said second entity.

26. The method of claim 25, further comprising the step of storing association between the first entity and the second entity.

27. The method of claim 26, wherein the association is stored in a store external to said network.

28. The method of claim 27, wherein said store is arranged to store information identifying said network.

29. The method of claim 27 or 28, further comprising the step of the first entity sending information identifying said second entity and/or said first entity to said store.

30. The method of any of claims 25 to 29, wherein said communication network is a wireless network and/or a cellular network.

31. The method of any of claims 25 to 30, wherein said second entity is a mobile terminal.

32. The method of any of claims 25 to 31, wherein said first entity is an IP entity or a portable computer.

33. The method of any of claims 25 to 32, wherein an authentication procedure is performed between the first entity and the second entity and/or between the first entity and the communication network.

34. The method of any of claims 25 to 33, wherein said first entity is arranged to request an IP address and said network allocates an address.

35. The method of any of claims 25 to 34, wherein the first entity is arranged to establish a connection with an IP location service provider and to provide the IP location service provider with the information identifying the first entity and the information identifying the second entity.

36. The method of any of claims 25 to 35, wherein the information identifying the first entity and the information identifying the second entity is provided to an IP location server via the communications network.

## Patentansprüche

1. Netzwerk mit einer ersten Einheit (30; 302; 502), die mit zumindest einem Netzelement (32; 34) kommuniziert, wobei die erste Einheit (30; 302; 502) ausgestaltet ist, um bei deren Verwendung eine Verbindung mit einem in Bezug auf das Netzwerk (42; 306; 506) externen Element über das zumindest eine Netzelement (32; 34) aufzubauen,
**dadurch gekennzeichnet, dass**:
die erste Einheit (30; 302; 502) oder das zumindest eine Netzelement (32; 34) mit einer zugewiesenen Adresse (31) ausgestattet ist, zum Empfangen einer Informationsanfrage über die Position der ersten Einheit (30; 302; 502) von dem externen Element (42; 306; 506), wobei jede an der zugewiesenen Adresse (31) empfangene Anfrage eine Informationsanfrage über die Position der ersten Einheit ist.

2. Netzwerk nach Anspruch 1, wobei die Anfrage über dasselbe Mittel wie eine Benutzerinformation von dem externen Element (42; 306; 506) zu der ersten Einheit (30; 302; 502) befördert wird.

3. Netzwerk nach Anspruch 2, wobei eine Übertragungsebene zwischen der ersten Einheit (30; 302; 502) und dem externen Element (42; 306; 506) bereitgestellt ist, wobei die Anfrage und Benutzerinformation über die Übertragungsebene zu der ersten Einheit (30; 302; 502) gesendet werden.

4. Netzwerk nach einem vorhergehenden Anspruch, wobei die Benutzerinformation empfangen wird durch und/oder übertragen wird von einer Adresse in der ersten Einheit (30; 302; 502) oder zumindest einem Netzelement (32; 34), die von der zugewiesenen Adresse (31) verschieden ist.

5. Netzwerk nach einem der vorhergehenden Ansprüche, wobei die Information über die Position der ersten Einheit (30; 302; 502) dem externen Element (42; 306; 506) über die zugewiesene Adresse (31) bereitgestellt ist.

6. Netzwerk nach einem vorhergehenden Anspruch, wobei die zugewiesene Adresse (31) ein zugewiesener Anschluss innerhalb einer Benutzeradresse ist.

7. Netzwerk nach einem vorhergehenden Anspruch, wobei die zugewiesene Adresse (31) in der ersten Einheit (30; 302; 502) angeordnet ist.

8. Netzwerk nach einem vorhergehenden Anspruch, wobei das zumindest eine Netzelement (32; 34) hinsichtlich einer zwischen der ersten Einheit (30; 302; 502) und dem externen Element (42; 306; 506) gesendeten Information transparent ist.

9. Netzwerk nach einem vorhergehenden Anspruch, wobei die erste Einheit (30; 302; 502) ausgestaltet ist zum Erhalten einer Information hinsichtlich deren Position im Ansprechen auf eine an ihrer zugewiesenen Adresse (31) empfangenen Anfrage.

10. Netzwerk nach einem vorhergehenden Anspruch, wobei die erste Einheit (30; 302; 502) ausgestaltet ist zum Berechnen der Position der ersten Einheit und/oder Empfangen einer Information hinsichtlich der Position der ersten Einheit.

11. Netzwerk nach einem vorhergehenden Anspruch, wobei das zumindest eine Netzelement (32; 34) ausgestaltet ist zum Überprüfen von Anfragen von dem externen Element (42; 306; 506) an die erste Einheit (30; 302; 502) und zum Einleiten einer Prozedur zum Bereitstellen einer Information für das externe Element (42; 306; 506) bezüglich des Orts der ersten Einheit (30; 302; 502), falls eine Anfrage die zugewiesene Adresse (31) identifiziert.

12. Netzwerk nach einem vorhergehenden Anspruch, wobei das Netzwerk ein General Packet Radio Services Netzwerk oder ein Paketdaten Netzwerk ist.

13. Netzwerk nach einem vorhergehenden Anspruch, wobei sich die Anfrage auf die geographische Position der ersten Einheit (30; 302; 502) bezieht.

14. Netzwerk nach einem vorhergehenden Anspruch, wobei die Anfrage den Start einer geographischen Positionsbestimmungsprozedur durch die erste Einheit (30; 302; 502) auslöst.

15. Netzwerk nach einem vorhergehenden Anspruch mit:
einer zweiten Einheit (300; 500), wobei die zweite Einheit (300; 500) über die erste Einheit (30; 302; 502) mit dem Netzwerk verbunden werden kann;
einem Mittel zum Speichern einer Verknüpfung zwischen der ersten Einheit (30; 302;
502) und der zweiten Einheit (300; 500), wobei die Verknüpfung eine Information umfasst, die die erste Einheit (30; 302; 502) identifiziert, und eine Information, die die zweite Einheit (300; 500) identifiziert, wodurch eine Information über die Position der zweiten Einheit (300; 500) bestimmt ist durch Bestimmen einer Information über die Position der mit der zweiten Einheit (300; 500) verknüpften ersten Einheit (30; 302; 502).

16. Netzwerk nach einem vorhergehenden Anspruch mit einer dritten Einheit, die ausgeschaltet ist zum Speichern einer Information bezüglich des Orts der ersten Einheit (30; 302; 502), wobei zumindest ein Netzelement zwischen der ersten Einheit (30; 302; 502) und der dritten Einheit bereitgestellt ist, wobei die dritte Einheit ausgestaltet ist zum Empfangen der Anfrage von dem externen Element (42; 306; 506).

17. Netzwerk nach Anspruch 16, wobei die dritte Einheit eine Schnittstelle mit dem oder einem zweiten externen Element aufweist.

18. Netzwerk nach Anspruch 17, wobei das oder das zweite externe Netzelement eines ist aus:
einem Kommunikationselement, das der dritten Einheit (30; 302; 502) erlaubt, mit der Außenwelt des Netzwerks zu kommunizieren; und
dem Internet.

19. Netzwerk nach einem der Ansprüche 17 bis 18, wobei eine Vielzahl von Netzwerken bereitgestellt sind, wobei die Netzwerke ausgestaltet sind zum Kommunizieren über das oder das zweite externe Element.

20. Netzwerk nach einem der Ansprüche 16 bis 19, wobei die dritte Einheit ausgestaltet ist zum Weiterleiten der Anfrage an ein jeweiliges Netzelement in Übereinstimmung mit der in der dritten Einheit gespeicherten Information.

21. Netzwerk nach Anspruch 20, wobei die dritte Einheit ein Gateway Mobile Location Centre ist.

22. Erste Einheit (30; 302; 502) in einem Netzwerk:
wobei die erste Einheit mit zumindest einem Netzelement (32; 34) kommuniziert, wobei die erste Einheit (30; 302; 502) ausgestaltet ist, um bei deren Verwendung eine Verbindung mit einem gegenüber dem Netzwerk (42; 306; 506) externen Element über das zumindest eine Netzelement (32; 34) aufzubauen,
**dadurch gekennzeichnet, dass**:
die erste Einheit (30; 302; 502) mit einer zugewiesenen Adresse (31) ausgestattet ist zum Empfangen einer Anfrage nach einer Information über die Position der ersten Einheit (30; 302; 502) von dem externen Element (42; 306; 506), wobei jede an der zugewiesenen Adresse (31) empfangene Anfrage eine Anfrage nach einer Information über die Position der ersten Einheit ist.

23. Netzelement in einem Netzwerk:
wobei das Netzelement (32; 34) ausgestaltet ist, um bei dessen Verwendung eine Verbindung zwischen einer ersten Einheit (30; 302; 502) in dem Netzwerk und einem gegenüber dem Netzwerk (42; 306; 506) externen Element aufzubauen,
**dadurch gekennzeichnet, dass**:
das Netzelement (32; 34) mit einer zugewiesenen Adresse (31) ausgestattet ist zum Empfangen einer Anfrage nach einer Information über die Position der ersten Einheit (30; 302; 502) von dem externen Element (42; 306; 506), wobei jede an der zugewiesenen Adresse (31) empfangene Anfrage eine Anfrage nach einer Information über die Position der ersten Einheit ist.

24. Verfahren mit:
Verwenden einer ersten Einheit in einem Netzwerk zum Aufbauen einer Verbindung mit einem gegenüber dem Netzwerk externen Element über zumindest ein Netzelement;
**gekennzeichnet durch**:
Empfangen einer Anfrage nach einer Information über die Position der ersten Einheit von dem externen Element an einer zugewiesenen Adresse der ersten Einheit oder des zumindest einen Netzelements, wobei jede an der zugewiesenen Adresse empfangene Anfrage eine Anfrage nach einer Information über die Position der ersten Einheit ist.

25. Verfahren nach Anspruch 24, wobei eine zweite Einheit über die erste Einheit an das Netzwerk anschließbar ist, wobei das Verfahren umfasst:
Definieren einer Verknüpfung zwischen der ersten Einheit und der zweiten Einheit, wobei die Verknüpfung eine Information umfasst, die die erste Einheit identifiziert, und eine Information, die die zweite Einheit identifiziert;
Bestimmen der Position der ersten Einheit; und, basierend auf der Verknüpfung, Bereitstellen einer Information über die Position der ersten Einheit als Information über die Position der zweiten Einheit.

26. Verfahren nach Anspruch 25, desweiteren umfassend den Schritt des Speicherns einer Verknüpfung zwischen der ersten Einheit und der zweiten Einheit.

27. Verfahren nach Anspruch 26, wobei die Verknüpfung in einem gegenüber dem Netzwerk externen Speicher gespeichert wird.

28. Verfahren nach Anspruch 27, wobei der Speicher ausgestaltet ist zum Speichern einer das Netzwerk identifizierenden Information.

29. Verfahren nach Anspruch 27 oder 28, desweiteren umfassend den Schritt des Sendens einer Information, die die zweite Einheit und/oder die erste Einheit identifiziert durch die erste Einheit an den Speicher.

30. Verfahren nach einem der Ansprüche 25 bis 29, wobei das Kommunikationsnetzwerk ein drahtloses Netzwerk und/oder ein zellulares Netzwerk ist.

31. Verfahren nach einem der Ansprüche 25 bis 30, wobei die zweite Einheit ein mobiles Endgerät ist.

32. Verfahren nach einem der Ansprüche 25 bis 31, wobei die erste Einheit eine IP-Einheit oder ein tragbarer Computer ist.

33. Verfahren nach einem der Ansprüche 25 bis 32, wobei eine Authentifizierungsprozedur zwischen der ersten Einheit und der zweiten Einheit und/oder zwischen der ersten Einheit und dem Kommunikationsnetzwerk durchgeführt wird.

34. Verfahren nach einem der Ansprüche 25 bis 33, wobei die erste Einheit ausgestaltet ist zum Anfordern einer IP-Adresse und das Netzwerk eine Adresse zuweist.

35. Verfahren nach einem der Ansprüche 25 bis 34, wobei die erste Einheit ausgestaltet ist zum Aufbauen einer Verbindung mit einem IP-Positionsdienstanbieter und zum Bereitstellen der die erste Einheit identifizierenden Information und der die zweite Einheit identifizierenden Information für den IP-Positionsdienstanbieter.

36. Verfahren nach einem der Ansprüche 25 bis 35, wobei die die erste Einheit identifizierende Information und die die zweite Einheit identifizierende Information einem IP-Positionsserver über das Kommunikationsnetzwerk zugeführt wird.

## Revendications

1. Réseau comprenant une première entité (30 ; 202 ; 502) qui est en communication avec au moins un élément de réseau (32 ; 34), ladite première entité (30 ; 302 ; 502) étant agencée, en utilisation, pour établir une connexion avec un élément externe au dit réseau (42 ; 306 ; 506) par l'intermédiaire dudit au moins un élément de réseau (32 ; 34),
**caractérisé par** :
l'un de ladite première entité (30 ; 302 ; 502) et dudit au moins un élément de réseau (32 ; 34) sont munis d'une adresse dédiée (31) pour recevoir une demande d'information sur l'emplacement de ladite première entité (30 ; 302 ; 502) de la part dudit élément externe (42 ; 306 ; 506), dans lequel toute demande reçue à ladite adresse dédiée (31) est une demande d'information sur l'emplacement de la première entité.

2. Réseau selon la revendication 1, dans lequel ladite demande est transportée par les mêmes moyens en tant qu'information d'utilisateur de l'élément externe (42 ; 306 ; 506) à la première entité (30 ; 302 ; 502).

3. Réseau selon la revendication 2, dans lequel un plan de transmission est fourni entre ladite première entité (30 ; 302 ; 502) et ledit élément externe (42 ; 306 ; 506), ladite demande et lesdites informations d'utilisateur étant envoyées à la première entité (30 ; 302 ; 502) par l'intermédiaire du plan de transmission.

4. Réseau selon l'une quelconque des revendications précédentes, dans lequel les informations d'utilisateur sont reçues par et/ou transmises d'une adresse dans l'un de ladite première entité (30 ; 302 ; 502) et d'au moins un élément de réseau (32 ; 34) qui est différente de l'adresse dédiée (31).

5. Réseau selon l'une quelconque des revendications précédentes, dans lequel lesdites informations sur l'emplacement de la première entité (30 ; 302 ; 502) sont fournies au dit élément externe (42 ; 306 ; 506) par l'intermédiaire de ladite adresse dédiée (31).

6. Réseau selon l'une quelconque des revendications précédentes, dans lequel ladite adresse dédiée (31) est un port dédié à l'intérieur d'une adresse d'utilisateur.

7. Réseau selon l'une quelconque des revendications précédentes, dans lequel ladite adresse dédiée (31) est située dans ladite première entité (30 ; 302 ; 502).

8. Réseau selon l'une quelconque des revendications précédentes, dans lequel ledit au moins un élément de réseau (32 ; 34) est transparent aux informations envoyées entre ladite première entité (30 ; 302 ; 502) et ledit élément externe (42 ; 306 ; 506).

9. Réseau selon l'une quelconque des revendications précédentes, dans lequel ladite première entité (30 ; 302 ; 502) est agencée pour obtenir des informations en ce qui concerne son emplacement en réponse à une demande reçue à son adresse dédiée (31).

10. Réseau selon l'une quelconque des revendications précédentes, dans lequel la première entité (30 ; 302 ; 502) est agencée pour calculer l'emplacement de la première entité et/ou recevoir des informations en ce qui concerne l'emplacement de la première entité.

11. Réseau selon l'une quelconque des revendications précédentes, dans lequel ledit au moins un élément de réseau (32 ; 34) est agencé pour contrôler des demandes de l'élément externe (42 ; 306 ; 506) à la première entité (30 ; 302 ; 502) et si une demande identifie l'adresse dédiée (31), lancer une procédure pour fournir des informations à l'élément externe (42 ; 306 ; 506) en ce qui concerne l'emplacement de la première entité (30 ; 302 ; 502).

12. Réseau selon l'une quelconque des revendications précédentes, dans lequel ledit réseau est l'un des réseaux suivants : GPRS ou un réseau de données par paquets.

13. Réseau selon l'une quelconque des revendications précédentes, dans lequel ladite demande concerne l'emplacement géographique de ladite première entité (30 ; 302 ; 502).

14. Réseau selon l'une des revendications précédentes, dans lequel ladite demande provoque le démarrage d'une procédure de positionnement géographique par ladite première entité (30 ; 302 ; 502).

15. Réseau selon l'une quelconque des revendications précédentes, comprenant :
une deuxième entité (300 ; 500), ladite deuxième entité (300 ; 500) pouvant être connectée au dit réseau par l'intermédiaire de ladite première entité (30 ; 302 ; 502) ;
des moyens pour stocker une association entre ladite première entité (30 ; 302 ; 502) et ladite deuxième entité (300 ; 500), ladite association comprenant des informations identifiant ladite première entité (30 ; 302 ; 502) et des informations identifiant la deuxième entité (300 ; 500), de telle manière que des informations sur l'emplacement de ladite deuxième entité (300 ; 500) sont déterminées en déterminant des informations sur l'emplacement de ladite première entité (30 ; 302 ; 502) associée à ladite deuxième entité (300 ; 500).

16. Réseau selon l'une quelconque des revendications précédentes, comprenant une troisième entité qui est agencée pour stocker des informations relatives à l'emplacement de ladite première entité (30 ; 302 ; 502), au moins un élément de réseau étant fourni entre ladite première entité (30 ; 302 ; 502) et ladite troisième entité, ladite troisième entité étant agencée pour recevoir ladite demande dudit élément externe (42 ; 306 ; 506).

17. Réseau selon la revendication 16, dans lequel ladite troisième entité a une interface avec le ou un deuxième élément externe.

18. Réseau selon la revendication 17, dans lequel le ou un deuxième élément externe est l'un des éléments suivants :
un élément de communication qui permet à ladite troisième entité (30 ; 302 ; 502) de communiquer avec l'extérieur dudit réseau ; ou
l'Internet.

19. Réseau selon l'une quelconque des revendications 17 et 18, dans lequel une pluralité de réseaux sont fournis, lesdits réseaux étant agencés pour communiquer avec ledit ou un deuxième élément externe.

20. Réseau selon l'une quelconque des revendications 16 à 19, dans lequel ladite troisième entité est agencée pour transférer ladite demande à un élément de réseau respectif en fonction des informations stockées dans ladite troisième entité.

21. Réseau selon la revendication 20, dans lequel ladite troisième entité est un centre d'emplacement mobile de passerelle (GMLC).

22. Première entité (30 ; 302 ; 502) dans un réseau :
ladite première entité étant en communication avec au moins un élément de réseau (32 ; 34),
ladite première entité (30 ; 302 ; 502) étant agencée, en utilisation, pour établir une connexion avec un élément externe au dit réseau (42 ; 306 ; 506) par l'intermédiaire dudit au moins un élément de réseau (32 ; 34),
**caractérisée par** :
ladite première entité (30 ; 302 ; 502) est munie d'une adresse dédiée (31) pour recevoir une demande d'information sur l'emplacement de la première entité (30 ; 302 ; 502) dudit élément externe (42 ; 306 ; 506), dans laquelle toute demande reçue à ladite adresse dédiée (31) est une demande d'information sur l'emplacement de la première entité.

23. Elément de réseau dans un réseau :
ledit élément de réseau (32 ; 34) étant agencé, en utilisation, pour établir une connexion avec une première entité (30 ; 302 ; 502) dans ledit réseau et un élément externe au dit réseau (42 ; 306 ; 506),
**caractérisé par** :
ledit élément de réseau (32 ; 34) est muni d'une adresse dédiée (31) pour recevoir une demande d'information sur l'emplacement de la première entité (30 ; 302 ; 502) dudit élément externe (42 ; 306 ; 506), dans lequel toute demande reçue à ladite adresse dédiée (31) est une demande d'information sur l'emplacement de la première entité.

24. Procédé comprenant l'étape consistant à :
utiliser une première entité dans un réseau pour établir une connexion avec un élément externe au dit réseau par l'intermédiaire d'au moins un élément de réseau ;
**caractérisé par** l'étape consistant à :
recevoir à une adresse dédiée de l'un de ladite première entité et dudit au moins un élément de réseau une demande d'information sur l'emplacement de la première entité dudit élément externe, dans lequel toute demande reçue à ladite adresse dédiée est une demande d'information sur l'emplacement de la première entité.

25. Procédé selon la revendication 24, dans lequel une deuxième entité est connectable au dit réseau par l'intermédiaire de ladite première entité, ledit procédé comprenant les étapes consistant à :
définir une association entre ladite première entité et ladite deuxième entité, ladite association comprenant des informations identifiant ladite première entité et des informations identifiant ladite deuxième entité ;
déterminer l'emplacement de ladite première entité ; et sur la base de ladite association, fournir des informations sur l'emplacement de ladite première entité en tant qu'information sur l'emplacement de ladite deuxième entité.

26. Procédé selon la revendication 25, comprenant en outre l'étape consistant à stocker une association entre la première entité et la deuxième entité.

27. Procédé selon la revendication 26, dans lequel l'association est stockée dans un stockage externe au dit réseau.

28. Procédé selon la revendication 27, dans lequel ledit stockage est agencé pour stocker des informations identifiant ledit réseau.

29. Procédé selon la revendication 27 ou 28, comprenant en outre l'étape consistant à ce que la première entité envoie des informations identifiant ladite deuxième entité et/ou ladite première entité au dit stockage.

30. Procédé selon l'une quelconque des revendications 25 à 29, dans lequel ledit réseau de communication est un réseau sans fil et/ou un réseau cellulaire.

31. Procédé selon l'une quelconque des revendications 25 à 30, dans lequel ladite deuxième entité est un terminal mobile.

32. Procédé selon l'une quelconque des revendications 25 à 31, dans lequel ladite première entité est une entité IP ou un ordinateur portable.

33. Procédé selon l'une quelconque des revendications 25 à 32, dans lequel une procédure d'authentification est effectuée entre la première entité et la deuxième entité et/ou entre la première entité et le réseau de communication.

34. Procédé selon l'une quelconque des revendications 25 à 33, dans lequel ladite première entité est agencée pour demander une adresse IP et ledit réseau alloue une adresse.

35. Procédé selon l'une quelconque des revendications 25 à 34, dans lequel la première entité est agencée pour établir une connexion avec un fournisseur d'accès à un emplacement IP et pour fournir au fournisseur d'accès à un emplacement IP les informations identifiant la première entité et les informations identifiant la deuxième entité.

36. Procédé selon l'une quelconque des revendications 25 à 35, dans lequel les informations identifiant la première entité et les informations identifiant la deuxième entité sont fournies à un serveur d'emplacement IP par l'intermédiaire du réseau de communication.
